# EUROPEAN PATENT SPECIFICATION

(11) **EP 3 786 064 B1**
(45) Date of publication and mention of the grant of the patent: **24.01.2024**
(21) Application number: 19216607.2
(22) Date of filing: 16.12.2019
(51) Int. Cl.: B64D 11/06

(54) **CONFIGURABLE CABIN ATTENDANT SEAT**
KONFIGURIERBARER FLUGBEGLEITERSITZ
SIÈGE DE MEMBRE D'ÉQUIPAGE CONFIGURABLE

(30) Priority: 26.08.2019 US 201916551403
(43) Date of publication of application: 03.03.2021
(73) Proprietor: B/E Aerospace, Inc., Winston Salem, NC 27105 (US)
(72) Inventor: DOWTY, Mark B., Rural Hall, NC 27045 (US); BRATLAND, J.C. Matthew, Winston-Salem, NC 27104 (US)
(74) Representative: Dehns

(56) References cited:
- EP-A1- 2 991 899
- EP-A1- 3 368 417
- WO-A1-88/01589
- FR-A1- 2 980 457
- US-A1- 2018 057 169
- US-B2- 7 905 451
- US-B2- 9 327 837

## Description

### BACKGROUND

Several components within an aircraft cabin are used only when the aircraft is in taxi, takeoff, or landing phases (TTL). Aircraft cabin attendant seats, also referred to as jump seats, are one such TTL component, as the cabin attendant typically utilizes aircraft cabin attendant seats only under TTL phases. These seats are typically placed in either the forward section or rear section of the aircraft (e.g., adjacent to a galley or cockpit) as well near exit doors.

Because aircraft cabin attendant seats are not used during flight, they have been designed to be minimized during flight. This strategy allows for more efficient use of space in the cabin. For instance, a conventional seat for an aircraft flight attendant includes a pulldown seat that may be built into a bulkhead facing away from passenger seating. During TTL phase, the seat may be pulled down into a seating position and used. Once in flight, the seat may be folded back into the bulkhead wall, and the space originally occupied by the sitting flight attendant may now be used for other flight activities (e.g., assisting a passenger or setting up a drink cart). Reducing the three-dimensional space taken up by the aircraft cabin attendant seat may also increase the ability of aircraft staff and passengers to move around the cabin, resulting in increased work flow, morale, and passenger safety.

In today's airline industry, aircraft design continues to push forward to more efficient use of space (e.g., increased passenger seating). Unfortunately, increasing passenger seating may reduce the space available to other items in the aircraft cabin, including lavatories and aircraft attendant seats. Complicating matters further, government agencies (e.g., the Federal Aviation Administration or the European Aviation Safety Agency) have promulgated regulations that mandate minimal dimensions for many aspects of aircraft cabins, including widths of emergency exit passageways. Accordingly, there is a need for a solution that provides space for increasing passenger number or passenger space while maintaining seating for aircraft attendants and meeting regulations related to exit passageway dimensions. US 7905451 B2, EP 2991899 A1, 2018/057169 A1, US9327837B2 and WO 88/01589 A1 relate to seats for cabin attendants

### SUMMARY

An aircraft cabin attendant seat according to claim 1 is provided.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is a side view of an aircraft cabin attendant seat in an TTL configuration disposed adjacent to an aircraft passenger seat, in accordance with an example, which is not claimed.
FIG. 1B is a side view of an aircraft cabin attendant seat in non-TTL configuration disposed adjacent to an aircraft passenger seat, in accordance with an example, which is not claimed.
FIG. 2A is a side view of an aircraft cabin attendant seat in an TTL configuration disposed adjacent to an aircraft passenger seat, in accordance with one or more embodiments of this disclosure;
FIG. 2B is a side view of an aircraft cabin attendant seat in a non-TTL configuration disposed adjacent to an aircraft passenger seat, in accordance with one or more embodiments of this disclosure;
FIG. 3A is a front view of an aircraft cabin attendant seat in a TTL configuration disposed adjacent to an aircraft passenger seat, in accordance with one or more embodiments of this disclosure; and
FIG. 3B is a front view of an aircraft cabin attendant seat in a storage configuration disposed adjacent to an aircraft passenger seat, in accordance with one or more embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein.

Broadly, embodiments of the disclosure are directed to a configurable aircraft cabin attendant seat. Aircraft cabin attendant seats are typically placed in the forward or rear sections of the aircraft cabin, as well as near exit doors. Because aircraft cabin attendant seats are not used when the aircraft has attained cruising altitude, many such seats are designed to be folded away (e.g., having a seat lifted up if the seat is attached to a bulkhead), allowing more space for attendants and passengers to move around the cabin, such as in the assist space (e.g., an unobstructed area where attendants may assist evacuees), increasing work efficiency and safety. However, simple seat folding designs often require bulkheads that themselves constrict space to attendants and passengers. Furthermore, a seat folded into a bulkhead would prevent that surface area of the bulkhead to be further utilized (e.g., for storage or supporting an appliance. Consequentially, there is a need for an aircraft cabin attendant seat that allows for more efficient use of space than allowed previously.

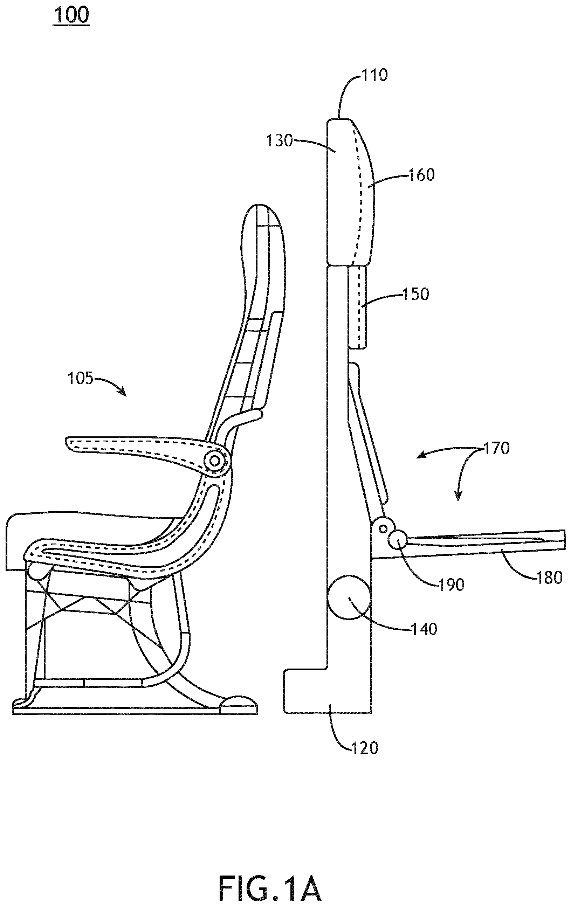

FIG. 1A is a side view of an aircraft cabin attendant seat 100 in an TTL configuration (e.g., seat down position) disposed adjacent to an aircraft passenger seat 105, in accordance with an example, which is not claimed. The aircraft cabin attendant seat 100 further includes a bottom support element portion 120 and a top support element portion 130. The top support element portion 130 provides an attachment surface for several components of the aircraft cabin attendant seat 100. The bottom support element portion 120 attaches to the floor of the aircraft cabin, securing the aircraft cabin attendant seat 100. The support element 110 also includes a coupler 140. The coupler 140 couples the top support element portion 130 to the bottom support element portion 120. The coupler 140 is configured to allow rotation of the top support element portion 130 along a horizontal axis (e.g., towards or away from the passenger seat 105). The coupler 140 may be any type of device that allows rotation along a horizontal axis, including but not limited to a hinge. The support element 110 and other components of the aircraft cabin attendant seat 100 may be constructed of any maternal known in the art known to be used as aircraft interior structural material, including but not limited to plastic, metal (e.g., aluminum), composite material (e.g., carbon fiber) and wood.

The aircraft cabin attendant seat 100 further includes a backrest 150, attached to the top support element portion 130 of the support element 110. The backrest 150 provides support and comfort to the back of a flight attendant while sitting in the aircraft cabin attendant seat 100.

The backrest 150 may be configured as a contoured or noncontoured surface of the top support element portion. The backrest 150 may further include a cushion.

The aircraft cabin attendant seat 100 further includes a headrest 160, attached to the top support element portion 130 of the support element 110. The headrest 160 provides support and comfort to the head of a flight attendant while sitting in the aircraft cabin attendant seat 100.

The headrest 160 may be configured as a contoured or noncontoured surface of the top support element portion. The headrest 160 may further include a cushion.

The aircraft cabin attendant seat further includes a seating portion 170. The seating portion 170 is coupled to the top support element portion 130 of the support element 110. The seating portion 170 further includes a seat 180 and a hinge 190. The hinge 190 couples the seat 180 to the top support element portion 130. The hinge 190 permits the seat 180 to extend substantially perpendicular from the support element 110, where seat 180 may support the weight of a flight attendant. When the seat 180 is not in use, the hinge 190 permits the seat to be tilted upwards along a horizontal axis until the seat rests adjacent and substantially parallel to the backrest 150.

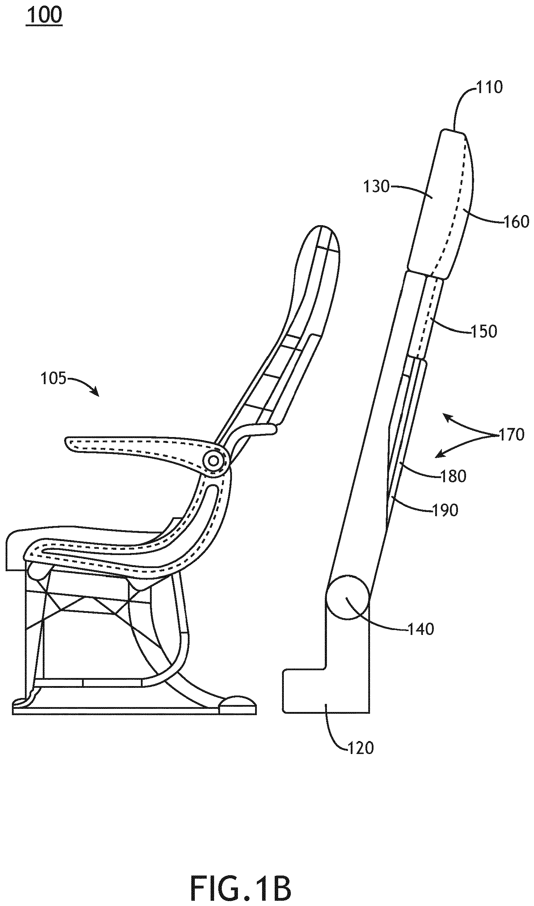

FIG. 1B is a side view of an aircraft cabin attendant seat 100 in a non-TTL configuration (e.g., seat 180 folded and the top support element portion 130 tilted) disposed adjacent to an aircraft passenger seat 105, in accordance with an example, which is not claimed. Tilting of the top support element portion 130 away from the passenger seat 105 allows the passenger seat 105 to further recline. This configuration permits the designed pitch between the passenger seat 105 and the aircraft cabin attendant seat 100 to be substantially small in TTL phase while allowing the aircraft passenger seat 105 to recline during non-TTL phases. The coupler 140 is configured to limit the amount of tilt by the aircraft cabin assistant seat (e.g., the coupler 140 may be adjusted to accommodate the reclining of the aircraft passenger seat 105). Alternatively, the coupler 140 may be configured to permit the aircraft cabin attendant seat 100 to tilt all the way to the cabin floor or into a recess within the cabin floor. The coupler 140 may be configured to tilt to a degree between the tilt needed to accommodate an aircraft passenger seat 105 and the floor. The coupler 140 may be configured to allow the aircraft cabin attendant seat 100 to tilt both away from and towards an aircraft passenger seat 105. For instance, the aircraft cabin attendant seat 100 may be configured to tilt away from the front of the aircraft passenger seat 105 (e.g., allowing the passenger to have increased leg rest space). Therefore, the above description should not be interpreted as a limitation of the present disclosure, but merely an illustration.

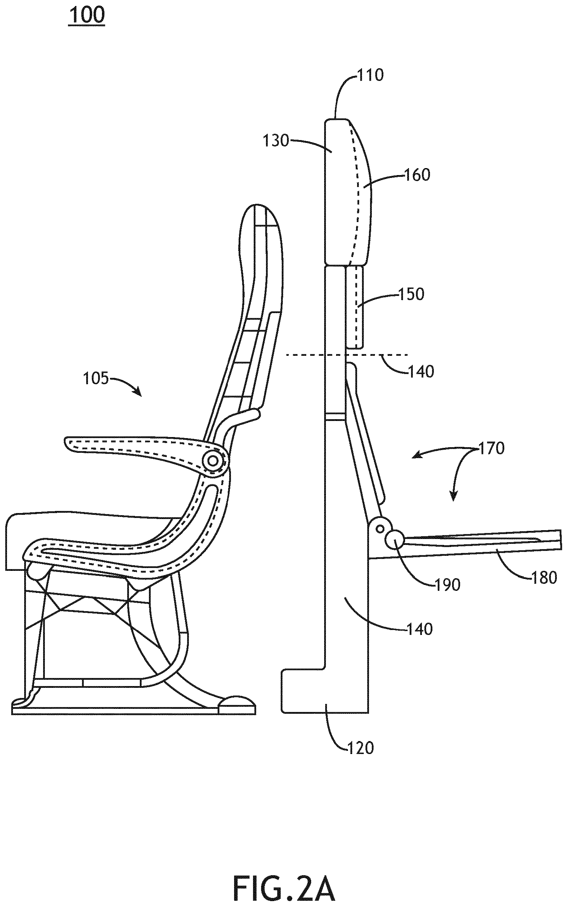

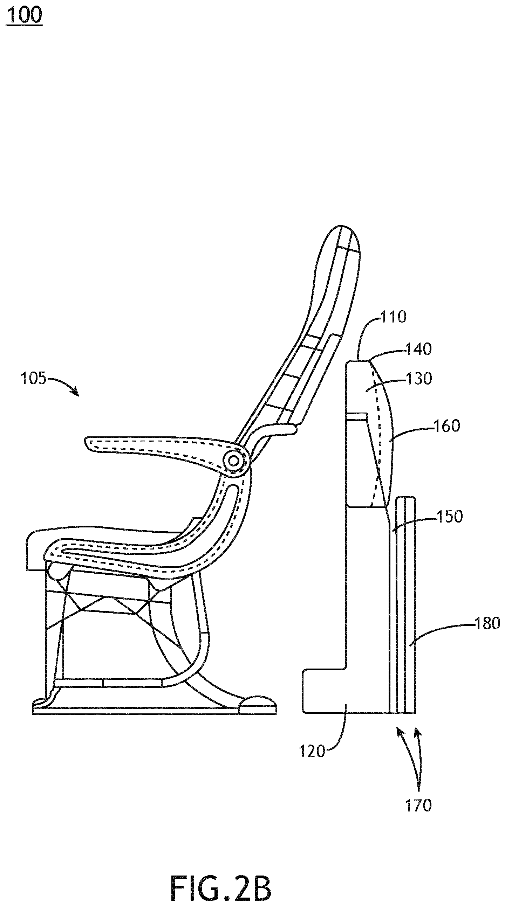

FIG. 2A is a side view of an aircraft cabin attendant seat 100 in a TTL configuration disposed adjacent to an aircraft passenger seat 105, in accordance with one or more embodiments of this disclosure. In some embodiments, the coupler 140 is disposed at a medial position along the support element 110. For instance, the coupler 140 may be disposed superior to the seating portion 170 and/or the portion of the support element 110 coupled to the backrest 150 (e.g., at the dotted horizontal line in FIG 2A). In some embodiments, the coupler 140 is a guided track system further configured to lock the top support element portion into an upright position during a TTL phase. During flight, the coupler 140 may be unlocked, and the top support element portion130 may be configured to slide down along the guided track over the bottom support element portion 120 to form a compact structure (e.g., the compact structure in FIG. 2B). In some embodiments, the coupler 140 may be a hinge configured to allow the top support element portion 130 to fold over the bottom support element portion 120 to form a compact structure. Upon sliding or folding the aircraft cabin attendant seat 100 into a more compact structure, the passenger seat 105 immediately adjacent to the aircraft cabin attendant seat 100 may more fully recline. Alternatively, the space savings gained from the configuring the aircraft cabin attendant seat 100 into a compact structure may allow the designed pitch between passenger seats 105 to be increased, resulting in increased legroom.

In some embodiments, the aircraft cabin attendant seat 100 may be configured to rotate along a vertical axis (although not shown). For instance, by rotating along a vertical axis, the aircraft cabin attendant seat 100 (e.g., in a storage configuration) may be disposed adjacent and parallel to an armrest (e.g., or used as an armrest) of a passenger seat, a cabin wall or bulkhead. In this manner rotating the aircraft cabin assistant seat along a vertical axis frees up space that may be used as an assist space or other working space. In a similar manner, the aircraft cabin attendant seat 100 (e.g., in a storage configuration) may be disposed adjacent and parallel to a lateral side of the passenger seat 105. In another instance, the aircraft cabin attendant seat may be configured to rotate from the footwell of a passenger seat 105 to a position outside of the footwell of the aircraft passenger seat 105, allowing a passenger full use of the footwell in-flight. In some embodiments, the aircraft cabin attendant seat 100 may slide along a first direction (e.g., along a guided track) in order to free up cabin space (e.g., assist space) or to give the passenger more room (e.g., legroom), or allowing the aircraft passenger seat 105 to further recline. In some embodiments, the aircraft cabin assistant seat may be configured to both rotate on a vertical axis and slide in a first direction. Therefore, the above description should not be interpreted as a limitation of the present disclosure, but merely an illustration.

In some embodiments, the aircraft cabin attendant seat 100 is disposed immediately adjacent to or within the aft row back shell of a passenger seat 105. For instance, during TTL phase, the back shell of a passenger seat 105 may abut to the rear of the support element 110 of the aircraft cabin attendant seat 100. When in-flight, the support element 110 may be moved out of the way of the back shell, allowing the passenger seat 105 to recline. In another instance, the back shell of the passenger seat and the rear of the support element 110 of the aircraft cabin attendant seat 100 are coupled together as one unit, allowing both passenger and attendant to sit within their respective seats at TTL phase. In flight, the attendant is no longer sitting in the aircraft cabin attendant seat 100, allowing the passenger to recline the passenger seat 105.

In some embodiments, the aircraft cabin attendant seat 100 may be further configured to be integrated into an element of the passenger seat 105 and/or aircraft cabin. For instance, the aircraft cabin attendant seat 100 may integrate into a bulkhead or partition of the aircraft cabin (e.g., the aircraft cabin attendant seat may act as a partition in itself). Upon leaving TTL phase, the aircraft cabin attendant seat 100 may be further configured to move (e.g., rotate, or move along a track), allowing more space for passenger and/or attendant. In another instance, the aircraft cabin attendant seat 100 may integrate into passenger seat 105 (e.g., configured in a back-to-back configuration, allowing both passenger and attendant to sit at the same time). In another instance, the aircraft cabin attendant seat 100 may integrate into an element within the passenger seating area, such as a partition that defines the footwell of the passenger seating area during TTL. In this instance, upon leaving TTL phase, the aircraft cabin attendant seat 100 may be further configured to move (e.g., rotate, or move along a track), allowing more legroom for the passenger.

In some embodiments, the aircraft cabin attendant seat 100 may be configured to seat two or more flight attendants. For instance, the aircraft cabin attendant seat 100 may have individual top support element portions, but have a single shared seat (e.g., a bench). In another instance, the aircraft cabin seat may have both shared top and bottom support element portions. It should be noted that the aircraft cabin attendant seat may have any combination of shared components for two or more passengers. Therefore, the above description should not be interpreted as a limitation of the present disclosure, but merely as an illustration.

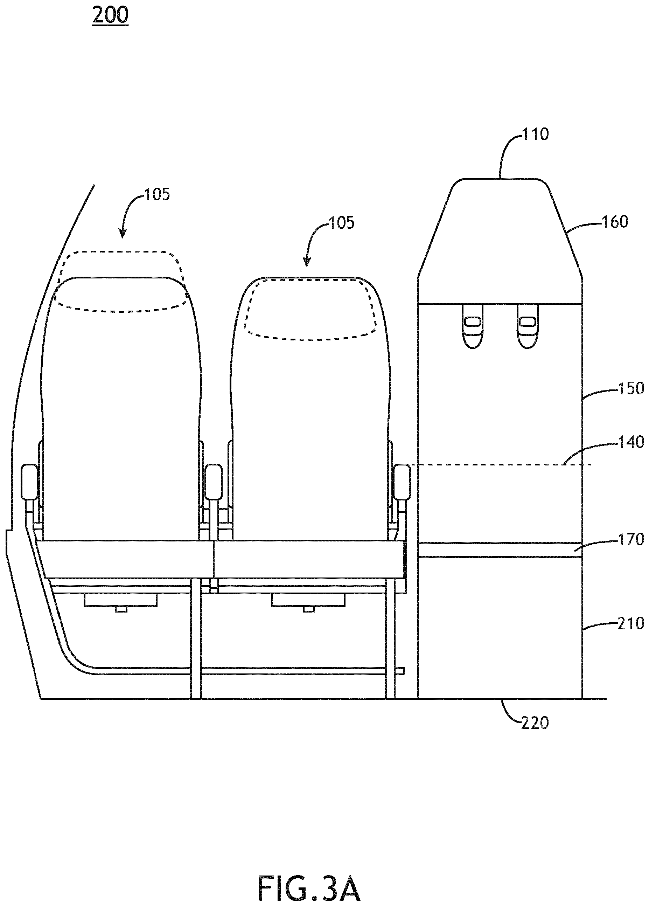

FIG. 3A is a front view of an aircraft cabin attendant seat 200 in an TTL configuration disposed adjacent to aircraft passenger seats 105, in accordance with one or more embodiments of this disclosure. The aircraft cabin attendant seat 200 further includes a support element 110. The support element 110 is configured to include two or more subsections that allow the support element 110 to fold upon itself into a compact structure.

The aircraft cabin attendant seat 200 further includes a backrest 150. The backrest 150 is attached to one or more subsections of the support element 110. In some embodiments the backrest 150 is attached to two subsections that are further coupled by a coupler 140 (e.g., the dotted horizontal line in FIG. 3A). The coupler 140 is further configured to allow at least one of the subsections of the backrest 150 to fold and or slide upon another subsection of the backrest 150.

The aircraft cabin attendant seat 200 further includes a headrest 160 disposed above the backrest 150. In some embodiments, the headrest 160 is attached to a subsection of the support element 110. In some embodiments, the subsection of the support element 110 attached to the headrest 160 is coupled to a subsection of the support element 110 attached to the backrest 150, via a hinge or sliding track, permitting the subsections to fold and/or slide upon each other into a compact structure. The headrest 160 may be of any size or shape of a headrest 160 known in the art to be used in an aircraft cabin attendant seat 200 (e.g., an isosceles trapezoid or a square). In some embodiments, the headrest 160 and the backrest 150 are attached to the same subsection of the support element 110.

The aircraft cabin attendant seat 200 further includes a seating portion 170. The seating portion contains a seat 180 and a hinge 190 (although not shown). While in the TTL phase, the seating portion 170 is configured to have the seat 180 fully extended for use as a seat, as shown in FIG. 3A. While in flight, the seat 180 may be further configured to be rotated upward along a horizontal axis along the hinge 190, so that the seat 180 rests against the backrest 150 or a portion of the backrest 150. Alternatively, the seat 180 may be configured to be rotated downward along a horizontal axis via the hinge 190 (e.g., by unlocking a hinge locking mechanism that had maintained the seat 180 in TTL position), so that it rests against a lower support element subsection 210.

In some embodiments, the subsections of the aircraft cabin attendant seat 200 are coupled via a set of hinges, allowing the aircraft cabin attendant seat to fold into a compact form 215. Alternatively, in some embodiments, the subsections of the aircraft cabin attendant seat are coupled via a sliding track mechanism, allowing the subsections of the aircraft cabin attendant seat 200 to slide adjacent to each other into a compact form 215. Alternatively, the subsections may be positioned in a telescopic arrangement, allowing at least one subsection to fit inside of another subsection to product a compact form. It should be noted that any combination of the above compacting technologies, or other compacting technologies not listed here can be used to create a compact form 215 of the aircraft cabin attendant seat 200. Therefore, the above description should not be interpreted as a limitation of the present disclosure, but merely an illustration.

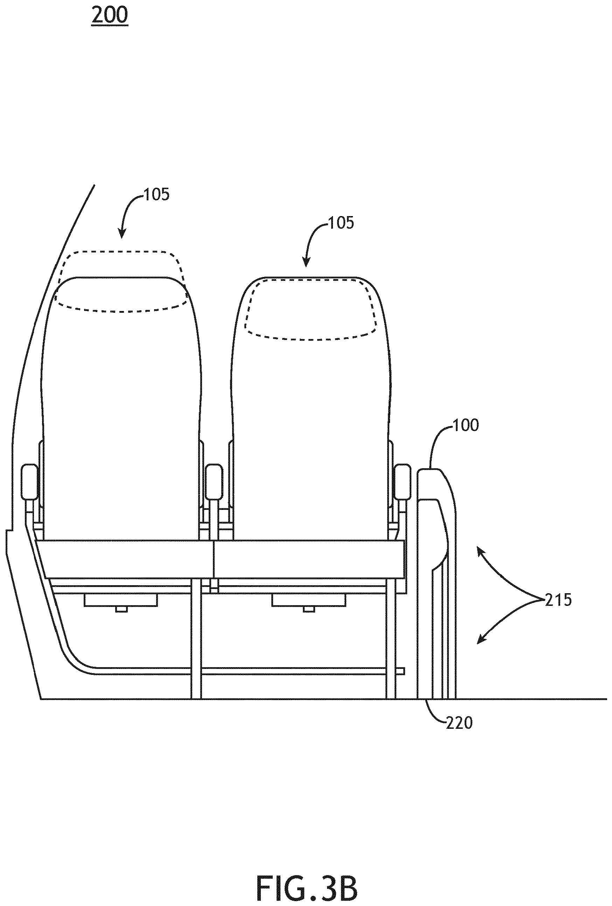

The aircraft cabin attendant seat may be attached to the cabin floor of the aircraft via a cabin floor coupler 220. In some embodiments, the cabin floor coupler is configured to allow the aircraft cabin attendant seat 200 to rotate along a vertical axis. Upon rotating along a vertical axis, the aircraft cabin attendant seat (e.g., either in compact form 215 or non-compact form) may align adjacent to and parallel to a wall, bulkhead, cabin seat, or armrest of a cabin seat. For instance, an aircraft cabin attendant seat 200 that disposed on the end of a row of passenger seats 205 may be configured to collapse into a compact form 215, then rotate along a vertical axis (e.g., along one corner of the aircraft cabin attendant seat 200) so that the compact form 215 of the aircraft cabin assistant seat 200 is adjacent and parallel to the armrest of a passenger seat 105 and/or the lateral side of the passenger seat (e.g., as in FIG. 3B). In some embodiments, the compact form 215 of the aircraft cabin assistant seat 200 is configured to operate as the armrest of the passenger seat 205. In some embodiments, the cabin floor coupler 220 may be configured to slide the aircraft cabin assistant seat 200 on a guided track. In some embodiments, the cabin floor coupler 220 may be further configured to both rotate the aircraft cabin assistant seat 200 along a vertical axis and slide the aircraft cabin assistant seat 200 on a guided track. Therefore, the above description should not be interpreted as a limitation of the present disclosure, but merely an illustration.

The compact form 215 of the aircraft cabin assistant seat 200 is configured to operate as a pedestal or table. For instance, the compact form 215 may be configured to hold refreshments, literature (e.g., magazines or advertisements), or other objects during flight. In another instance, the compact form may be configured to operate as a bench (e.g., for a passenger waiting to use the lavatory). The compact form 215 of the aircraft cabin assistant seat 200 may be configured for other uses not listed here. Therefore, the above description should not be interpreted as a limitation of the present disclosure, but merely an illustration.

In some embodiments, the compact form 215 of the aircraft cabin assistant seat 200 may be further configured to fold onto the cabin floor. For instance, once the aircraft cabin assistant seat 200 has collapsed into a compact form 215, the cabin floor coupler 220 may be configured to allow the compact form 215 to translate to a position adjacent and parallel to the cabin floor (e.g., to lay flat on the cabin floor). Once positioned onto the floor, the compact form 215 of the aircraft cabin assistant seat 200 may be further configured to slide or move upon a vertical axis to create more usable space in the assist space (e.g., by sliding and/or swinging underneath a passenger seat). In some embodiments, the compact form 215 of the aircraft cabin assistant seat 200 may fold into a recess of the cabin floor. In some embodiments, the compact form 215 of the aircraft cabin assistant seat 200 may be readily removed in-flight (e.g., via a quick detach/reattach mechanism) and stored.

In some embodiments, the aircraft cabin attendant seat 200 may be configured to seat two or more flight attendants. For instance, the aircraft cabin attendant seat 200 may have individual backrest and headrest portions, but have a single shared seat (e.g., a bench). In another instance, the aircraft cabin attendant seat 200 may have both shared backrest, headrest and seat portions. It should be noted that the aircraft cabin attendant seat may have any combination of shared components for two or more passengers. Therefore, the above description should not be interpreted as a limitation of the present disclosure, but merely as an illustration.

In some embodiments, the aircraft cabin attendant seat 200 may be further configured to be integrated into an element of the passenger seat 105 and/or aircraft cabin. For instance, the aircraft cabin attendant seat 200 may integrate into a bulkhead or partition of the aircraft cabin (e.g., the aircraft cabin attendant seat may act as a partition in itself). Upon leaving TTL phase, the aircraft cabin attendant seat 200 may be further configured to move (e.g., rotate, or move along a track), allowing more space for passenger and/or attendant. In another instance, the aircraft cabin attendant seat 200 may integrate into passenger seat 105 (e.g., configured in a back-to-back configuration, allowing both passenger and attendant to sit at the same time). In another instance, the aircraft cabin attendant seat 200 may integrate into an element within the passenger seating area, such as a partition that defines the footwell of the passenger seating area during TTL. In this instance, upon leaving TTL phase, the aircraft cabin attendant seat 200 may be further configured to move (e.g., rotate, or move along a track), allowing more legroom for the passenger.

It should be noted that the aircraft cabin attendant seat 100, 200 may be configured to include safety harnesses (e.g., seat belts), pockets, audio-visual user interface devices, or any other components known in the art to be associated with an aircraft cabin attendant seat 100, 200. Therefore, the description herein should not be a limitation of the present disclosure, but merely an interpretation.

Components illustrated and described herein are merely examples of a system/device and components that may be used to implement embodiments of the concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. An aircraft cabin attendant seat (100), comprising:
a support element extending from a cabin floor comprising of an at least two coupled support element subsections configured to at least one of slide or fold onto each other;
a coupler (140) configured to attach the support element to the cabin floor, wherein the coupler is further configured to at least one of translate the support element along a first direction parallel to the cabin floor or rotate the support element about a vertical axis;
a backrest (150) coupled to the support element;
a headrest (160) coupled to the support element disposed above to the backrest;
a seating portion (170) coupled to the support element disposed below the backrest, comprising:
a seat (180); and
a hinge (190) configured to couple the seat to the support element, wherein the seat is configured to retract from a seated position into a storage position;
wherein at least one support element subsection is configured to collapse upon an adjacent support subsection via a guided track;
wherein the aircraft cabin attendant seat is further configured to collapse into a compact form for use of an at least one of a table or pedestal.

2. The aircraft cabin attendant seat (100) of claim 1, wherein the three support element subsections are coupled via a subsection hinge allowing rotation along a horizontal axis.

3. The aircraft cabin attendant seat (100) of claim 1 or 2, wherein at least one support element subsection is configured to fit into an adjacent support element subsection via a telescopic configuration.

4. The aircraft cabin attendant seat (100) of any of claims 1 to 3, further configured to collapse into a compact form disposed adjacent to and parallel to an at least one of a passenger armrest or a lateral side of a passenger seat (105).

5. The aircraft cabin attendant seat (100) of any of claims 1 to 4, further configured to collapse into a compact form, wherein the compact form is further configured to at least one of lay flat on the cabin floor or lay within a recess in the cabin floor.

6. The aircraft cabin attendant seat (100) of any of claims 1 to 5, further configured to accommodate at least two attendants.

7. The aircraft cabin attendant seat (100) of any of claims 1 to 6, further configured to integrate into at least one of a bulkhead, a partition, a passenger seat, or an element within a passenger seating area.

## Patentansprüche

1. Flugzeug-Flugbegleitersitz (100), Folgendes umfassend:
ein Stützelement, das sich von einem Kabinenboden aus erstreckt, bestehend aus mindestens zwei gekoppelten Stützelement-Unterabschnitten, die konfiguriert sind, um sich mindestens eines von aufeinander zu schieben oder sich aufeinander zu falten;
einen Koppler (140), der konfiguriert ist, um das Stützelement an dem Kabinenboden anzubringen, wobei der Koppler ferner konfiguriert ist, um mindestens eines von das Stützelement entlang einer ersten Richtung parallel zu dem Kabinenboden zu verschieben oder das Stützelement um eine vertikale Achse zu drehen;
eine Rückenlehne (150), die mit dem Stützelement gekoppelt ist; eine Kopfstütze (160), die mit dem oberhalb der Rückenlehne angeordneten Stützelement gekoppelt ist;
einen Sitzteil (170), der mit dem unterhalb der Rückenlehne angeordneten Stützelement gekoppelt ist, Folgendes umfassend:
einen Sitz (180); und
ein Scharnier (190), das konfiguriert ist, um den Sitz mit dem Stützelement zu koppeln, wobei der Sitz konfiguriert ist, um sich von einer Sitzposition in eine Aufbewahrungsposition zurückzuziehen;
wobei mindestens ein Stützelement-Unterabschnitt konfiguriert ist, um über eine geführte Spur auf einen benachbarten Stützelement-Unterabschnitt zusammenzufallen;
wobei der Flugzeug-Flugbegleitersitz ferner konfiguriert ist, um in eine kompakte Form zur Verwendung von mindestens eines von einem Tisch oder einem Podest zusammenzufallen.

2. Flugzeug-Flugbegleitersitz (100) nach Anspruch 1, wobei die drei Stützelement-Unterabschnitte über ein Unterabschnittsscharnier gekoppelt sind, wodurch eine Drehung entlang einer horizontalen Achse ermöglicht wird.

3. Flugzeug-Flugbegleitersitz (100) nach Anspruch 1 oder 2, wobei mindestens ein Stützelement-Unterabschnitt konfiguriert ist, um über eine teleskopische Konfiguration in einen benachbarten Stützelement-Unterabschnitt zu passen.

4. Flugzeug-Flugbegleitersitz (100) nach einem der Ansprüche 1 bis 3, der ferner konfiguriert ist, um in eine kompakte Form zusammenzufallen, die benachbart und parallel zu mindestens einer von einer Passagierarmlehne oder einer seitlichen Seite eines Passagiersitzes (105) angeordnet ist.

5. Flugzeug-Flugbegleitersitz (100) nach einem der Ansprüche 1 bis 4, der ferner konfiguriert ist, um in eine kompakte Form zusammenzufallen, wobei die kompakte Form ferner konfiguriert ist, um mindestens eines von flach auf dem Kabinenboden zu liegen oder innerhalb einer Aussparung in dem Kabinenboden zu liegen.

6. Flugzeug-Flugbegleitersitz (100) nach einem der Ansprüche 1 bis 5, der ferner konfiguriert ist, um mindestens zwei Flugbegleiter aufzunehmen.

7. Flugzeug-Flugbegleitersitz (100) nach einem der Ansprüche 1 bis 6, der ferner konfiguriert ist, um in mindestens eines von einer Spritzwand, einer Trennwand, einem Passagiersitz oder einem Element innerhalb eines Passagiersitzbereichs integriert zu werden.

## Revendications

1. Siège de membre d'équipage d'aéronef (100), comprenant :
un élément de support s'étendant à partir d'un plancher de cabine comprenant au moins deux sous-sections d'élément de support couplées configurées pour au moins coulisser ou se replier l'une sur l'autre ;
un coupleur (140) configuré pour fixer l'élément de support au plancher de cabine, dans lequel le coupleur est également configuré pour au moins traduire l'élément de support le long d'une première direction parallèle au plancher de la cabine ou faire pivoter l'élément de support autour d'un axe vertical ;
un dossier (150) couplé à l'élément de support ;
un appui-tête (160) couplé à l'élément de support disposé au-dessus du dossier ;
une partie d'assise (170) couplée à l'élément de support disposé sous le dossier, comprenant :
un siège (180) ; et
une charnière (190) configurée pour coupler le siège à l'élément de support, dans lequel le siège est configuré pour se rétracter d'une position assise à une position de rangement ;
dans lequel au moins une sous-section d'élément de support est configurée pour se replier sur une sous-section de support adjacente via une piste guidée ;
dans lequel le siège de membre d'équipage d'aéronef est également configuré pour se replier sous une forme compacte permettant d'utiliser au moins l'un parmi une table ou un socle.

2. Siège de membre d'équipage d'aéronef (100) selon la revendication 1, dans lequel les trois sous-sections d'éléments de support sont couplées via une charnière de sous-section permettant une rotation le long d'un axe horizontal.

3. Siège de membre d'équipage d'aéronef (100) selon la revendication 1 ou 2, dans lequel au moins une sous-section d'élément de support est configurée pour s'insérer dans une sous-section d'élément de support adjacente via une configuration télescopique.

4. Siège de membre d'équipage d'aéronef (100) selon l'une quelconque des revendications 1 à 3, configuré également pour se replier en une forme compacte disposée adjacente et parallèle à au moins l'un parmi un accoudoir passager ou un côté latéral d'un siège passager (105).

5. Siège de membre d'équipage d'aéronef (100) selon l'une quelconque des revendications 1 à 4, configuré également pour se replier en une forme compacte, dans lequel la forme compacte est également configurée pour au moins être posée à plat sur le sol de la cabine ou posée dans un évidement dans le plancher de la cabine.

6. Siège de membre d'équipage d'aéronef (100) selon l'une quelconque des revendications 1 à 5, configuré également pour accueillir au moins deux membres d'équipage.

7. Siège de membre d'équipage d'aéronef (100) selon l'une quelconque des revendications 1 à 6, configuré également pour s'intégrer dans au moins l'un parmi une cloison, une paroi, un siège passager ou un élément à l'intérieur d'une zone de siège passager.
